# EUROPÄISCHE PATENTSCHRIFT

(11) **EP 4 129 830 B1**
(45) Veröffentlichungstag und Bekanntmachung des Hinweises auf die Patenterteilung: **27.09.2023**
(21) Anmeldenummer: 21189649.3
(22) Anmeldetag: 04.08.2021
(51) Int. Cl.: B64F 1/305, B64F 1/315

(54) **KUPPELMODUL ALS SCHNITTSTELLE EINER FLUGGASTBRÜCKE ODER -TREPPE UND DEM RUMPF EINES FLUGZEUGS**
COUPLING MODULE AS AN INTERFACE BETWEEN AN AIR PASSENGER BOARDING BRIDGE OR STEPS AND THE FUSELAGE OF AN AIRPLANE
MODULE DE COUPLAGE COMME INTERFACE D'UN PONT OU D'UN ESCALIER POUR PASSAGERS ET LE FUSELAGE D'UN AVION

(43) Veröffentlichungstag der Anmeldung: 08.02.2023
(73) Patentinhaber: Hübner GmbH & Co. KG, 34123 Kassel (DE)
(72) Erfinder: Schuster, Heinz, 34123 Kassel (DE); Schmelz, Sebastian, 34226 Niestetal (DE)

(56) Entgegenhaltungen:
- EP-A1- 2 463 199
- EP-A1- 2 803 587
- EP-A1- 3 301 028
- EP-A1- 3 315 416
- EP-B1- 1 159 195
- EP-B1- 1 727 732
- US-A- 3 693 204

## Beschreibung

Die Erfindung betrifft ein Kuppelmodul als Schnittstelle zwischen einer Fluggastbrücke oder -treppe und dem Rumpf eines Flugzeugs, umfassend eine Kabine und ein an der Kabine angeordneter begehbarer Pendelboden, wobei zumindest der Pendelboden um eine Schwenkachse an der Kabine verschwenkbar angeordnet ist, um den Pendelboden an einer in einem Flugzeugrumpf vorhandenen Türöffnung auszurichten.

### STAND DER TECHNIK

Aus der EP 1 727 732 B1 ist ein Kuppelmodul als Schnittstelle zwischen einer Fluggastbrücke oder -treppe und dem Rumpf eines Flugzeugs bekannt. An einer Kabine ist ein begehbarer Boden angeordnet, der gegen den Flugzeugrumpf ausgefahren werden kann. Der ausfahrbare Boden kann um eine Querachse des Kuppelmoduls gekippt werden, um die Höhe der Vorderkante des Bodens an die Höhe der Türöffnung im Flugzeugrumpf anzupassen. Die Kippung des Pendelbodens erfolgt dabei in einem Gelenk, dessen Gelenkachse mit der Querachse zusammenfällt, die sich in Breitenrichtung des Pendelbodens erstreckt, und die damit etwa parallel verläuft zu einer Längsachse eines vor der Fluggastbrücke parkbaren Flugzeugs. Unterschiedlich hohe Unterkanten von Türöffnungen, an denen die Vorderseite des begehbaren Bodens angepasst werden muss, können damit nicht grundsätzlich ausgeglichen werden, da bei einer Änderung der Höhe der Unterkante der Türöffnung verschiedener Baumuster von Flugzeugen eine Verkippung des begehbaren Bodens in einer Schwenkachse erfolgen muss, die auf das parkbare Flugzeug zuläuft und damit senkrecht zur Querachse und damit zur Gelenkachse steht.

Eine ähnliche Lösung ist auch aus dem Dokument US 3 693 204 A bekannt.

Die EP 1 159 195 B1 offenbart ein Kuppelmodul als Schnittstelle zwischen einer Fluggastbrücke oder -treppe und dem Rumpf eines Flugzeugs, umfassend eine Kabine und ein an der Kabine angeordneter begehbarer Pendelboden, wobei der Pendelboden um eine Schwenkachse verschwenkbar ist, die etwa horizontal auf den Rumpf des vor dem Kuppelmodul parkbaren Flugzeugs zuläuft. Zugleich kann der Boden in einer Querachse verfahren werden, die senkrecht auf der Schwenkachse steht und sich in der Breitenrichtung des Pendelbodens erstreckt.

Aus dem Dokument EP 3 315 416 A1 ist eine ähnliche Lösung für ein Kuppelmodul bekannt, wobei ein von einem Faltenvordach überspannter Pendelboden gemeinsam mit dem Faltenvordach um eine Schwenkachse verschwenkt werden kann, welche etwa horizontal auf den Rumpf des vor dem Kuppelmodul parkbaren Flugzeugs zuläuft.

Aus den Dokumenten EP 2 463 199 A1 und EP 3 301 028 A1 ist jeweils ein Kuppelmodul bekannt, bei dem das Bodenteil an seinem in Richtung des Flugzeugs zugewandten Bodenkopfteil mehrere relativ zueinander horizontal verschiebbare Bodensegmente aufweist. Dadurch soll eine bessere Anformung des Bodenteils an die Kontur des Flugzeugsrumpfs erreicht werden.

Grundsätzlich ist es eine Anforderung an das Kuppelmodul als Schnittstelle zwischen einer Fluggastbrücke oder -treppe und dem Rumpf eines Flugzeugs, einen begehbaren Boden bereitzustellen, der in einer Ruheposition eine nur minimale Gesamttiefe aufweist, etwa wenn die Fluggastbrücke nicht genutzt wird. Die nach vorne in Richtung eines parkbaren Flugzeugs sich ergebende Gesamttiefe der Fluggastbrücke sollte möglichst eine vorgegebene spezifische Tiefe nicht überschreiten, wobei gleichzeitig eine Mindesttiefe notwendig ist, um bestimmte Flugzeuge abfertigen zu können.

Kuppelmodule von Fluggastbrücken weisen Böden auf, die häufig unterschiedliche in der Schwenkachse liegende Tiefen aufweisen, und das Maß zwischen dem Bumper, mit dem ein direkter Kontakt zum Flugzeugrumpf herstellbar ist, und einem Rolltor oder einer Schottwand im Kuppelmodul beträgt zumeist etwa 800mm. Neue, größere Flugzeuge besitzen jedoch Flugzeugtüren, die einen Schwenkbereich von über 1.000mm benötigen, sodass an ein Kuppelmodul mit einer Bodentiefe von 800mm vom Bumper bis zum Rolltor bzw. zur Schottwand nicht alle Flugzeugbaumuster angekuppelt werden können. In der Ruheposition der Fluggastbrücke sollte die Gesamttiefe des Kuppelmoduls jedoch eine spezifische Tiefe nicht überschreiten und vorgegebene Sicherheitsabstände müssen eingehalten werden.

### OFFENBARUNG DER ERFINDUNG

Aufgabe der Erfindung ist die weitere Verbesserung eines Kuppelmoduls mit einem Pendelboden, der in seinem Funktionsumfang so erweitert wird, dass eine hohe Anpassbarkeit des Kuppelmoduls an verschiedene Baumuster von Flugzeugen möglich ist, während der Pendelboden in der Ruheposition der Fluggastbrücke möglichst eine spezifische Tiefe nicht überschreitet.

Diese Aufgabe wird ausgehend von einem Kuppelmodul gemäß dem Oberbegriff des Anspruchs 1 und ausgehend von einer Fluggastbrücke gemäß Anspruch 15 mit den jeweils kennzeichnenden Merkmalen gelöst. Weitere, die Erfindung verbessernde Maßnahmen werden in den Unteransprüchen angegeben.

Der Erfindung liegt die Erkenntnis zugrunde, den Pendelboden mit wenigstens einem in Richtung des Flugzeugrumpfs verfahrbaren und begehbar ausgebildeten Vorderbodensegment auszubilden.

Kerngedanke der Erfindung ist die Weiterbildung eines Kuppelmoduls mit einem Pendelboden, welcher sowohl um eine Schwenkachse verschwenkbar ist, um den Pendelboden an unterschiedlich hohe Türöffnungen verschiedener Baumuster von Flugzeugen anzupassen, als auch den Pendelboden vorübergehend in Richtung zu einem parkenden Flugzeugrumpf zu verlängern. Für diese Verlängerung der Tiefe des Pendelbodens ist erfindungsgemäß ein Vorderbodensegment vorgesehen, das vorderseitig gegenüber einem Basiskörper des vorhandenen Pendelbodens des Kuppelmoduls in Richtung des Flugzeugrumpfs ausfahrbar ist. Der Basiskörper bildet dabei insbesondere einen Teil der begehbaren Fläche des Pendelbodens.

Der Pendelboden ist dabei um eine Schwenkachse an der Kabine verschwenkbar angeordnet, welche im Wesentlichen horizontal in Richtung eines parkenden Flugzeugs verläuft. Insbesondere verläuft die Ausrichtung der Schwenkachse senkrecht zur Quererstreckung des Pendelbodens. Die Quererstreckung bildet dabei die Breite des Pendelbodens aus, die unter Vernachlässigung einer Winkelstellung parallel zur Längsachse des Flugzeugs verläuft.

Die Ausfahrbarkeit kann auf verschiedene Weisen realisiert sein. Z. B. kann das Vorderbodensegment aus dem Pendelboden teleskopierbar sein, insbesondere also teleskopartig aus dem begehbaren Pendelboden nach vorne in Richtung des parkbaren Flugzeugs ausfahrbar ist. Dabei muss das Vorderbodensegment nicht vollumfänglich vom Pendelboden umschlossen sein, wenn dieses eingefahren ist, sodass die Teleskopierbarkeit auch dann gegeben ist, wenn das Vorderbodensegment wenigstens mit seiner überwiegenden Tiefe unter den Pendelboden fahren kann. Auch ist es möglich, dass das Vorderbodensegment in eine Ausnehmung, wie eine Tasche oder ein Freiraum, einfahren kann, die in dem Basiskörper des Pendelbodens eingebracht ist und die sich mit einer Aufnahmeöffnung zum Flugzeugrumpf hin öffnet, wobei das Vorderbodensegment in die Aufnahmeöffnung einfahrbar sein kann.

Weitere Möglichkeiten zur Realisierung der Ausfahrbarkeit sind, dass das Vorderbodensegment gegenüber dem Basiskörper verschwenkbar oder ausfächerbar ist.

Auch ist es von Vorteil, wenn das Vorderbodensegment derart ausgebildet ist, dass es über seine Breite mit unterschiedlichen Ausfahrlängen ausfahren kann. Das Vorderbodensegment kann dabei auch mehrere in Breitenrichtung nebeneinander oder fächerartig ausgebildete Teilsegmente aufweisen, die unterschiedlich weit ausgefahren bzw. aufgefächert werden können, um eine Krümmung des Flugzeugrumpfes auszugleichen. Ist das Vorderbodensegment einteilig ausgeführt, kann dieses beispielsweise auch in eine Art Schrägstellung ausfahren, insbesondere wobei ein vorderseitig am Vorderbodensegment angeordneter Bumper einen finalen Restausgleich schafft, der über die Krümmung des Flugzeugrumpfes verschieden weit eingedrückt werden kann.

Um das Vorderbodensegment gegenüber dem Pendelboden zu bewegen, können verschiedene Antriebsmöglichkeiten gegeben sein. Neben einem üblichen Antrieb über eine Spindel und einer Gewindestange oder über einen Ritzel-Zahnstein-Antrieb ist vorteilhafterweise vorgesehen, den Antrieb so auszulegen, dass das Vorderbodensegment bei ungewöhnlich starken Bewegungen der Fluggastbrücke gegen den Flugzeugrumpf keine Beschädigungen an letzterem verursacht. So ist es von Vorteil, wenn das Vorderbodensegment gewissermaßen nachgiebig federnd am Pendelboden angeordnet ist, sodass bei einer Druckbelastung des Flugzeugrumpfes gegen die Fluggastbrücke eine Nachgiebigkeit im Vorderbodensegment ermöglicht wird.

Zur Bildung einer Nachgiebigkeit des Vorderbodensegmentes relativ zum ansonsten starren Pendelboden ist vorteilhafterweise wenigstens ein Druckelement vorgesehen, mit dem das Vorderbodensegment in der ausfahrenden Richtung gegenüber dem Basiskörper des Pendelbodens kraftbeaufschlagt ist. Das oder die Druckelemente sind dazu ausgebildet, einem Gegendruck federnd nachzugeben, gleichwohl das Druckelement sich in einem Kraftfluss zwischen dem Pendelboden und dem Vorderbodensegment befindet und das Vorderbodensegment in nachgiebiger Weise in die ausfahrende Richtung vorspannt.

Insbesondere kann das Druckelement als Gasdruckfeder ausgeführt sein, sodass die Bewegung des Vorderbodensegmentes gegenüber dem Basiskörper des Pendelbodens zusätzlich zur Federwirkung eine Dämpfung erfährt, wobei in einem vereinfachten Fall das Druckelement auch als einfaches Federelement ausgeführt sein kann.

Weiter können wenigstens ein oder mehrere Zugmittel am Pendelboden eingerichtet sein, mit denen das Vorderbodensegment kraftbeaufschlagbar ist, wobei das oder die Zugmittel beispielsweise einen Flachriemen, ein Seil, insbesondere ein Drahtseil, ein Gurtband und/oder einen Zahnriemen aufweisen. Wird eine Kraft in das Zugmittel eingeleitet, so wirkt diese gegen die Kraft des Druckelementes, sodass eine eventuelle Kraft vom Flugzeugrumpf auf das Vorderbodensegment in der gleichen Kraftrichtung auf das Vorderbodensegment einwirkt wie auch das Zugmittel. Somit kann das Vorderbodensegment mit dem Zugmittel und einem zugehörigen mit dem Zugmittel wirkverbundenen Antriebsmittel so verfahren werden, dass eine permanente Kraftbeaufschlagung auf das Vorderbodensegment aus dem wenigstens einen oder vorzugsweise mehreren Druckelementen erfolgt. Soll das Vorderbodensegment wieder eingefahren werden, wird mit dem Antriebsmittel das Zugmittel eingefahren, sodass die Zugkraft des Zugmittels gegen das Druckelement wirkt und das Druckelement selbst gleichermaßen einfährt.

Das Kuppelmodul weist erfindungsgemäß ein Faltenvordach auf, mit dem der Pendelboden und optional das Vorderbodensegment überspannbar ist. Das Faltenvordach ist an dem Kuppelmodul angeordnet. Bei einer Verschwenkung des Pendelbodens kann das Faltenvordach so ausgeführt sein, dass bei einem Verschwenken des Pendelbodens keine seitlichen Lücken entstehen. Hierzu kann das Faltenvordach im unteren Endbereich nach unten verlängert sein und bis unter die Unterkante des Pendelbodens und/oder des Vorderbodensegmentes reichen. Erfindungsgemäß ist das Faltenvordach wenigstens abschnittsweise gemeinsam mit dem Vorderbodensegment ein- und ausfahrbar. Zusätzlich kann das Faltenvordach im Bereich des Vorderbodensegmentes längere Falten oder Wellen aufweisen als im Bereich des Pendelbodens, sodass es der Bewegung des Vorderbodensegmentes folgen kann.

Gemäß einer Ausführungsform kann ein vorderer Bereich des Faltenvordachs mit dem Vorderbodensegment in Richtung des Flugzeugrumpfs ausfahren. Somit werden seitliche Öffnungen vermieden, und das Faltenvordach kann mit einem Anlagerahmen auch dann an dem Flugzeugrumpf im Wesentlichen vollständig anliegen, wenn das Vorderbodensegment ausgefahren ist und das Faltenvordach wenigstens im vorderen Bereich mit ausfährt.

Das Kuppelmodul kann so ausgeführt sein, dass der Pendelboden mit dem Vorderbodensegment, dem Basiskörper, dem Bumper, dem Druckelement, dem Zugmittel, dem Antriebsmittel und/oder dem Faltenvordach eine vorkonfektionierbare Baugruppe bildet, die an der Kabine angeordnet werden kann. Die Anordnung erfolgt dabei insbesondere mit der vorstehend beschriebenen Schwenkbarkeit um die Schwenkachse, die etwa horizontal aus dem Kuppelmodul herausragt und gegen ein vor dem Kuppelmodul parkbares Flugzeug verlaufend ausgerichtet ist.

Die Erfindung richtet sich weiterhin auf eine Fluggastbrücke oder -treppe mit einem Kuppelmodul gemäß vorstehender Beschreibung.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Vorderbodensegment die Rede ist, so ist dies so zu verstehen, dass genau ein Vorderbodensegment, zwei Vorderbodensegmente oder mehrere Vorderbodensegmente vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht des Kuppelmoduls mit einem eingefahrenen Vorderbodensegment,
- Figur 2: eine Draufsicht auf den Pendelboden mit eingefahrenem Vorderbodensegment,
- Figur 3: eine Seitenansicht des Kuppelmoduls mit ausgefahrenem Vorderbodensegment,
- Figur 4: eine Draufsicht auf den Pendelboden mit ausgefahrenem Vorderbodensegment,
- Figur 5: eine perspektivische Ansicht des Kuppelmoduls von einer Unterseite,
- Figur 6: eine Ansicht des Kuppelmoduls mit einer Pendelbewegung nach links, die notwendig ist für kleinere Flugzeugbaumuster, und
- Figur 7: eine Ansicht des Kuppelmoduls mit einer Pendelbewegung des Pendelbodens nach rechts für größere Flugzeugbaumuster.

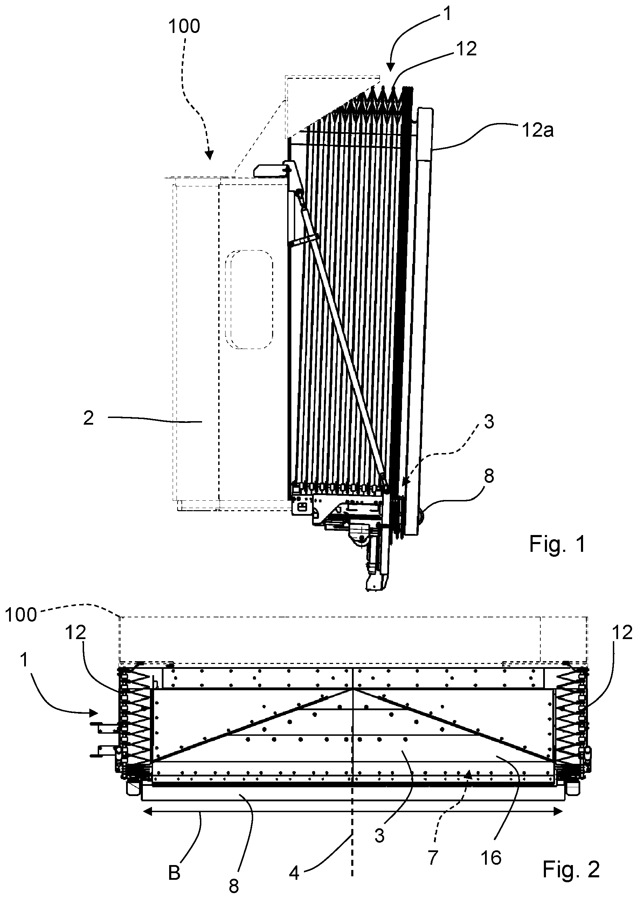

Figur 1 zeigt eine Seitenansicht des Kuppelmoduls 1 in Anordnung an einer Fluggastbrücke 100, die beispielsweise gebäudeseitig gelenkig und in der Höhe verfahrbar angebracht sein kann oder die Fluggastbrücke 100 bildet alternativ eine Fluggasttreppe, die ebenfalls das Kuppelmodul 1 aufweisen kann. In der Seitenansicht ist ein Faltenvordach 12 dargestellt, das einen innenseitig vorhandenen Pendelboden 3 verdeckt. Vorderseitig am Pendelboden 3 ist ein Bumper 8 angeordnet und teilweise in der Seitenansicht sichtbar, mit dem das Kuppelmodul 1 außenseitig am Rumpf des Flugzeugs zur Anlage gelangen kann. Das Faltenvordach 12 weist einen Anlagerahmen 12a auf, der flexibel ist und sich an den gekrümmten Flugzeugrumpf außenseitig anlegen kann.

Figur 2 zeigt eine Draufsicht auf den Pendelboden 3, wobei das Faltenvordach 12 geschnitten dargestellt ist. Durch den eingefahrenen Zustand des Vorderbodensegmentes 7 ist dieses nicht unmittelbar sichtbar, sondern das Vorderbodensegment 7 ist unter die begehbare Oberfläche eines Basiskörpers 16 des Pendelbodens 3 gefahren.

Der Pendelboden 3 ist um eine Schwenkachse 4 verschwenkbar, die, wie die Darstellung zeigt, senkrecht auf der in der Breite B verlaufenden Quererstreckung des Pendelbodens 3 steht. Das Kuppelmodul 1 findet sich dabei vorderseitig an der Fluggastbrücke 100.

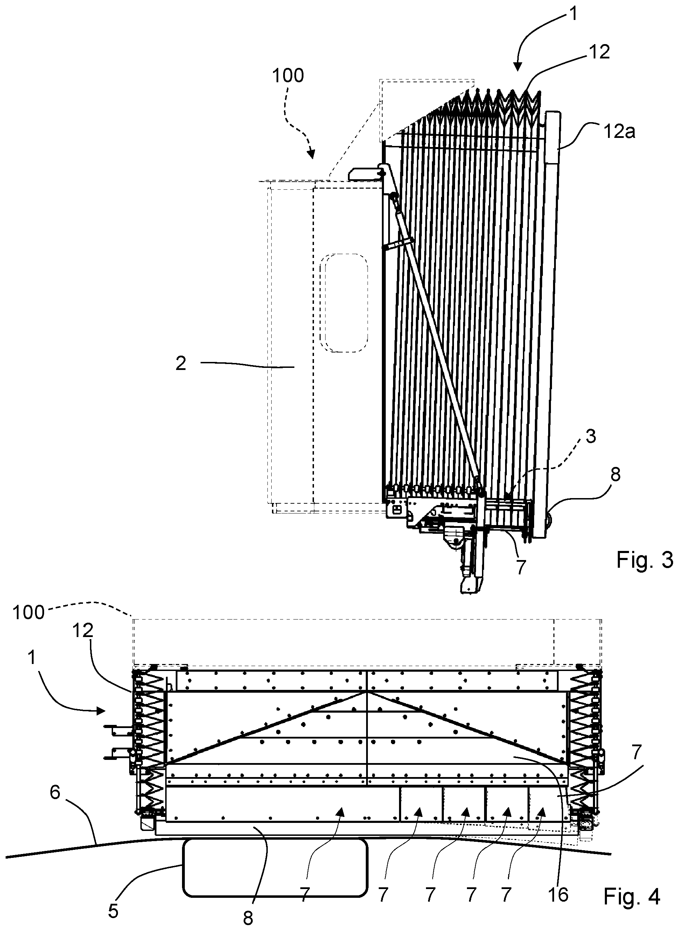

Figur 3 zeigt die Seitenansicht des Kuppelmoduls 1 in Anordnung an der Fluggastbrücke 100 ausgehend von Figur 1, wobei abweichend hiervon das Vorderbodensegment 7 im ausgefahrenen Zustand gezeigt ist, sodass sich mit dem Vorderbodensegment 7 die Tiefe des Pendelbodens 3 nach vorne in Richtung zum Bumper 8 hin verlängert. Dabei fährt auch der vordere Teil des Faltenvordaches 12 mit aus, wie ein Vergleich der Seitenansicht der Figur 3 mit der Seitenansicht der Figur 1 zeigt. Ist der Bumper 8 gegen die Außenseite des Flugzeugs gefahren worden, so kann anschließend der Anlagerahmen 12a an die Außenseite des Flugzeugs herangefahren werden.

Figur 4 zeigt eine Draufsicht auf den Pendelboden 3 mit dem vorderseitig ausgefahrenem Vorderbodensegment 7. Dabei verlängert sich der Pendelboden 3 in Richtung zum Flugzeugrumpf 6, wobei die Verlängerung etwa ein Maß von 100 mm bis 400 mm und bevorzugt von 250 mm bis 350 mm aufweist. Die Ausfahrlänge des Vorderbodensegmentes 7 kann unterschiedlich ausfallen. Auf der rechten Seite in der Bildebene ist das Vorderbodensegment 7 weiter ausgefahren als auf der linken Seite in der Bildebene, um die Vorderkante im Bereich des Bumpers 8 an die Krümmung des Rumpfes des Flugzeugs anzupassen. Die unterschiedliche Ausfahrlänge des Vorderbodensegmentes 7 wird insofern auch vom Faltenvordach 8 mit ausgeführt, sodass auch der Anlagerahmen 12a unterschiedlich große Ausfahrweiten aufweist. Das Vorderbodensegment 7 kann einteilig oder mehrteilig sein, sodass gemäß der Darstellung auch mehrere Vorderbodensegmente 7 unterschiedlich weit ausfahren können.

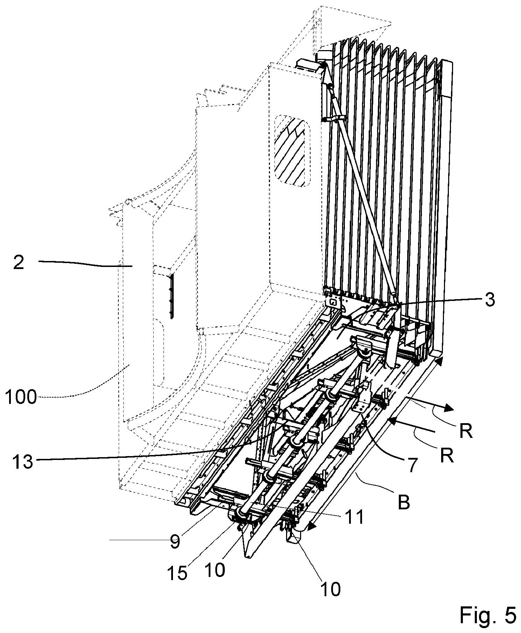

In Figur 5 ist eine perspektivische Ansicht des Kuppelmoduls 1 in Anordnung an der Fluggastbrücke 100 gezeigt, wobei die Ansicht den Pendelboden 3 von der Unterseite darstellt. Dabei wird zum Ausfahren des Vorderbodensegmentes 7 die dazu eingerichtete Bewegungs- und Antriebsmechanik deutlich. Das Vorderbodensegment 7 ist durch mehrere Druckelemente 9 in Form von Gasdruckfedern in eine ausfahrende Richtung Ra vorgespannt, die mit etwa gleichem Abstand zueinander über der Breite des Vorderbodensegmentes 7 verteilt angeordnet sind. Dabei kann das Vorderbodensegment 7 unterteilt sein in verschiedene Abschnitte, die auch einzeln und unabhängig voneinander mit den Druckelementen 9 in eine ausfahrende Richtung Ra ausgefahren werden können.

Die Druckelemente 9 drücken das wenigstens eine Vorderbodensegment 7 in die ausfahrende Richtung Ra, und als Gegenbewegungsmittel sind Zugmittel 10 vorgesehen, die mit einem oder jeweiligen Antriebsmitteln 11 verbunden sind. Das oder die Antriebsmittel 11 sind gemäß dem Ausführungsbeispiel als Rohrmotoren ausgebildet, die mit Zugmittelscheiben 15 wirkverbunden sind, über die das Zugmittel 10 geführt ist. So spannen die Druckelemente 9 das wenigstens eine Vorderbodensegment 7 gegen den Flugzeugrumpf in die ausfahrende Richtung Ra vor, und mit dem Zugmittel 10 und den zugehörigen Antriebsmitteln 11 kann das Vorderbodensegment 7 mit einer Gegenkrant in die einfahrende Richtung Re eingefahren werden.

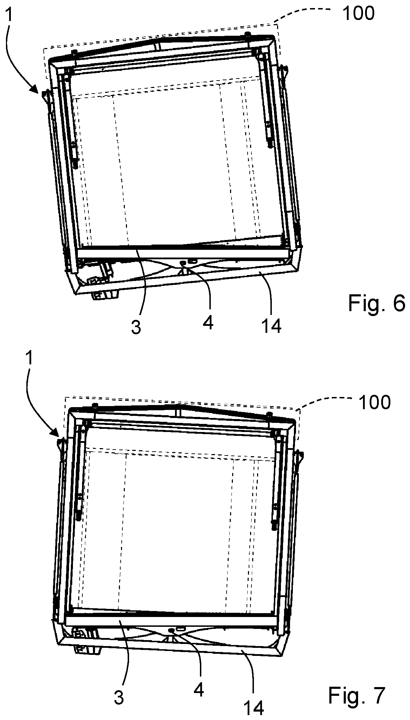

Figur 6 zeigt eine Vorderansicht des Kuppelmoduls 1 mit einer Pendelbewegung des Pendelbodens 3 relativ zur Fluggastbrücke 100 nach links für kleine Flugzeugbaumuster, bei denen die Fluggastbrücke 100 stark abgesenkt werden muss, sodass die Verdrehung des Pendelbodens 3 um die Schwenkachse 4 zur schräg verlaufenden Fluggastbrücke 10, etwa beispielsweise +6° beträgt. Der Pendelboden 3 wird unterseitig von einem Tragrahmen 14 der Fluggastbrücke 100 getragen.

Figur 7 stellt das Kuppelmodul 1 in einer Vorderansicht dar, bei der die Pendelbewegung des Pendelbodens 3 beispielsweise um -3° nach rechts ausgeführt ist, um eine Anpassung des Pendelbodens 3 an größere Flugzeuge vorzunehmen. Die Schwenkachse 4 befindet sich dabei unterhalb des Pendelbodens 3 und der Pendelboden 3 wird unterseitig von einem Tragrahmen 14 der Fluggastbrücke 100 getragen.

### Bezugszeichenliste:

- 1: Kuppelmodul
- 2: Kabine
- 3: Pendelboden
- 4: Schwenkachse
- 5: Türöffnung
- 6: Flugzeugrumpf
- 7: Vorderbodensegment
- 8: Bumper
- 9: Druckelement
- 10: Zugmittel
- 11: Antriebseinheit
- 12: Faltenvordach
- 12a: Anlageboden
- 13: Tragarm
- 14: Tragrahmen
- 15: Zugmittelscheibe
- 16: Basiskörper
- 100: Fluggastbrücke

- Ra: ausfahrende Richtung
- Re: einfahrende Richtung
- B: Breite

## Patentansprüche

1. Kuppelmodul (1) zur Verwendung als Schnittstelle zwischen einer Fluggastbrücke oder -treppe (100) und dem Flugzeugrumpf, umfassend
- eine Kabine (2),
- ein Faltenvordach (12) und
- einen begehbaren Pendelboden (3),
wobei
- zumindest der Pendelboden (3) um eine Schwenkachse (4), welche senkrecht zur Quererstreckung des Pendelbodens (3) verläuft, an der Kabine (2) verschwenkbar angeordnet ist zum Ausrichten des Pendelbodens (3) an einer Türöffnung (5) in einem Flugzeugrumpf (6) und
- der Pendelboden (3) mit dem Faltenvordach (12) überspannt ist,
**dadurch gekennzeichnet,**
**dass** der Pendelboden (3) wenigstens ein begehbar ausgebildetes Vorderbodensegment (7) aufweist, das gegenüber einem Basiskörper (16) des Pendelbodens (3) in Richtung des Flugzeugrumpfs verfahrbar ist, und dass das Faltenvordach (12) wenigstens abschnittsweise gemeinsam mit dem Vorderbodensegment (7) ein- und ausfahrbar ist und bei einer Verschwenkung des Pendelbodens (3) um die Schwenkachse (4) ruhend an der Kabine (2) verbleibt.

2. Kuppelmodul (1) nach Anspruch 1,
**dadurch gekennzeichnet,**
**dass** das Vorderbodensegment (7) gegenüber dem Basiskörper (16) teleskopierbar ist.

3. Kuppelmodul (1) nach Anspruch 1 oder 2,
**dadurch gekennzeichnet,**
**dass** das Vorderbodensegment (7) unter den Basiskörper (16) des Pendelbodens (3) und/oder in eine in dem Basiskörper (16) vorgesehene Ausnehmung fahrbar ist.

4. Kuppelmodul (1) nach einem der voranstehenden Ansprüche,
**dadurch gekennzeichnet,**
**dass** das Vorderbodensegment (7) dazu ausgebildet ist, über seine Breite (B) mit unterschiedlichen Ausfahrlängen (L1, L2) auszufahren.

5. Kuppelmodul (1) nach einem der voranstehenden Ansprüche,
**dadurch gekennzeichnet,**
**dass** vorderseitig am Vorderbodensegment (7) ein Bumper (8) angeordnet ist.

6. Kuppelmodul (1) nach einem der voranstehenden Ansprüche,
**dadurch gekennzeichnet,**
**dass** wenigstens ein Druckelement (9) vorgesehen ist, mit dem das Vorderbodensegment (7) in der ausfahrenden Richtung (Ra) kraftbeaufschlagt ist.

7. Kuppelmodul (1) nach Anspruch 6,
**dadurch gekennzeichnet,**
**dass** das Druckelement (9) in einem Kraftfluss zwischen dem Basiskörper (16) des Pendelbodens (3) und dem Vorderbodensegment (7) eingerichtet ist und/oder wobei das Druckelement (9) als Gasdruckfeder ausgeführt ist.

8. Kuppelmodul (1) nach einem der voranstehenden Ansprüche,
**dadurch gekennzeichnet,**
**dass** ein Zugmittel (10) an dem Pendelboden (3) eingerichtet ist, mit dem das Vorderbodensegment (7) kraftbeaufschlagbar ist und/oder wobei das Zugmittel (10) als ein Flachriemen, ein Seil und/oder ein Zahnriemen ausgeführt ist.

9. Kuppelmodul (1) nach Anspruch 8,
**dadurch gekennzeichnet,**
**dass** das Zugmittel (10) das Vorderbodensegment (7) gegen die Kraft des Druckelementes (9) in eine einfahrende Richtung (Re) kraftbeaufschlagt.

10. Kuppelmodul (1) nach Anspruch 8 oder 9,
**dadurch gekennzeichnet,**
**dass** eine Antriebseinheit (11) vorgesehen ist, mit dem das Zugmittel (10) in Wirkverbindung steht.

11. Kuppelmodul (1) nach einem der voranstehenden Ansprüche,
**dadurch gekennzeichnet,**
**dass** das Vorderbodensegment (7) mit dem Faltenvordach (12) überspannt ist und/oder das Faltenvordach (12) im Bereich des Vorderbodensegmentes (7) längere Falten oder Wellen aufweist als im Bereich des Pendelbodens (3).

12. Kuppelmodul (1) nach Anspruch 11,
**dadurch gekennzeichnet,**
**dass** ein unterer Endbereich des Faltenvordaches (12) bis unter die begehbare Oberseite des Pendelbodens (3) geführt ist, um bei einer Verschwenkung des Pendelbodens (3) um die Schwenkachse (4) eine Lückenbildung zwischen dem Faltenvordach (12) und dem Pendelboden (3) zu verhindern.

13. Kuppelmodul (1) nach einem der voranstehenden Ansprüche,
**dadurch gekennzeichnet,**
**dass** der Pendelboden (3) mit dem Vorderbodensegment (7), dem Bumper (8), dem Druckelement (9), dem Zugmittel (10), dem Antriebsmittel (11) und/oder dem Faltenvordach (12) eine vorkonfektionierbare Baugruppe bildet, die an der Kabine (2) anordenbar ist.

14. Kuppelmodul (1) nach einem der voranstehenden Ansprüche,
**dadurch gekennzeichnet,**
**dass** an der Kabine (2) ein Tragarm (13) angeordnet ist, mittels dem der Pendelboden (3) und/oder die vorkonfektionierbare Baugruppe in der Schwenkachse (4) verschwenkbar an der Kabine (2) aufgenommen ist.

15. Fluggastbrücke (100) oder-treppe mit einem Kuppelmodul (1) nach einem der vorgenannten Ansprüche.

## Claims

1. Coupling module (1) for use as an interface between an air passenger bridge or air passenger steps (100) and the fuselage, comprising
- a cabin (2),
- a folding canopy (12) and
- a walkable swivel floor (3),
wherein
- at least the swivel floor (3) is pivotably arranged on the cabin (2) about a pivot axis (4) which extends perpendicularly to the transverse extent of the swivel floor (3), in order to align the swivel floor (3) with a door opening (5) in a fuselage (6) and
- the swivel floor (3) is covered by the folding canopy (12),
**characterized in that**
the swivel floor (3) has at least one front floor segment (7) which is designed to be walkable and which is movable relative to a base body (16) of the swivel floor (3) in the direction of the fuselage, and **in that** the folding canopy (12) can be retracted and extended at least in portions together with the front floor segment (7) and remains resting on the cabin (2) when the swivel floor (3) is pivoted about the pivot axis (4).

2. Coupling module (1) according to claim 1,
**characterized in that**
the front floor segment (7) is telescopic with respect to the base body (16).

3. Coupling module (1) according to either claim 1 or claim 2,
**characterized in that**
the front floor segment (7) can be moved under the base body (16) of the swivel floor (3) and/or into a recess provided in the base body (16).

4. Coupling module (1) according to any of the preceding claims,
**characterized in that**
the front floor segment (7) is designed to extend at different extension lengths (L1, L2) over its width (B).

5. Coupling module (1) according to any of the preceding claims,
**characterized in that**
a bumper (8) is arranged on the front of the front floor segment (7).

6. Coupling module (1) according to any of the preceding claims,
**characterized in that**
at least one pressure element (9) is provided, by means of which the front floor segment (7) is subjected to force in the extending direction (Ra).

7. Coupling module (1) according to claim 6,
**characterized in that**
the pressure element (9) is placed in a force flow between the base body (16) of the swivel floor (3) and the front floor segment (7) and/or wherein the pressure element (9) is designed as a pneumatic spring.

8. Coupling module (1) according to any of the preceding claims,
**characterized in that**
a traction means (10) is placed on the swivel floor (3), by means of which traction means the front floor segment (7) can be subjected to force and/or wherein the traction means (10) is designed as a flat belt, a rope and/or a toothed belt.

9. Coupling module (1) according to claim 8,
**characterized in that**
the traction means (10) subjects the front floor segment (7) to force in a retraction direction (Re) against the force of the pressure element (9).

10. Coupling module (1) according to either claim 8 or claim 9,
**characterized in that**
a drive unit (11) is provided, with which the traction means (10) is operatively connected.

11. Coupling module (1) according to any of the preceding claims,
**characterized in that**
the front floor segment (7) is covered by the folding canopy (12) and/or the folding canopy (12) has longer folds or corrugations in the region of the front floor segment (7) than in the region of the swivel floor (3).

12. Coupling module (1) according to claim 11,
**characterized in that**
a lower end region of the folding canopy (12) extends to below the walkable upper side of the swivel floor (3) in order to prevent a gap forming between the folding canopy (12) and the swivel floor (3) when the swivel floor (3) is pivoted about the pivot axis (4).

13. Coupling module (1) according to any of the preceding claims,
**characterized in that**
the swivel floor (3) forms, together with the front floor segment (7), the bumper (8), the pressure element (9), the traction means (10), the drive means (11) and/or the folding canopy (12), an assembly which can be preassembled and arranged on the cabin (2).

14. Coupling module (1) according to any of the preceding claims,
**characterized in that**
a supporting arm (13) is arranged on the cabin (2), by means of which supporting arm the swivel floor (3) and/or the preassemblable assembly is received on the cabin (2) so as to be pivotable on the pivot axis (4).

15. Air passenger bridge (100) or air passenger steps comprising a coupling module (1) according to any of the preceding claims.

## Revendications

1. Module d'accouplement (1) destiné à être utilisé comme interface entre une passerelle ou un escalier d'embarquement (100) et le fuselage d'aéronef, comprenant
- une cabine (2),
- un auvent repliable (12) et
- un plancher pendulaire (3) accessible, dans lequel
- au moins le plancher pendulaire (3) est disposé sur la cabine (2) de manière à pouvoir pivoter autour d'un axe de pivotement (4), lequel s'étend perpendiculairement à l'étendue transversale du plancher pendulaire (3), pour l'alignement du plancher pendulaire (3) sur une ouverture de porte (5) dans un fuselage d'aéronef (6) et
- le plancher pendulaire (3) est recouvert par l'auvent repliable (12),
**caractérisé en ce**
**que** le plancher pendulaire (3) présente au moins un segment de plancher avant (7) accessible qui peut être déplacé en direction du fuselage d'aéronef par rapport à un corps de base (16) du plancher pendulaire (3), **et que** l'auvent repliable (12) peut être rétracté et déployé, au moins dans certaines régions, conjointement avec le segment de plancher avant (7) et reste au repos sur la cabine (2) lors d'un pivotement du plancher pendulaire (3) autour de l'axe de pivotement (4).

2. Module d'accouplement (1) selon la revendication 1,
**caractérisé en ce**
**que** le segment de plancher avant (7) est télescopique par rapport au corps de base (16).

3. Module d'accouplement (1) selon la revendication 1 ou 2,
**caractérisé en ce**
**que** le segment de plancher avant (7) peut être déplacé sous le corps de base (16) du plancher pendulaire (3) et/ou dans un évidement prévu dans le corps de base (16).

4. Module d'accouplement (1) selon l'une des revendications précédentes,
**caractérisé en ce**
**que** le segment de plancher avant (7) est conçu pour se déployer sur sa largeur (B) à des longueurs de déploiement (L1, L2) différentes.

5. Module d'accouplement (1) selon l'une des revendications précédentes,
**caractérisé en ce**
**qu**'un pare-chocs (8) est disposé à l'avant du segment de plancher avant (7).

6. Module d'accouplement (1) selon l'une des revendications précédentes,
**caractérisé en ce**
**qu**'au moins un élément de pression (9) est prévu, au moyen duquel le segment de plancher avant (7) est soumis à une force dans la direction de déploiement (Ra).

7. Module d'accouplement (1) selon la revendication 6,
**caractérisé en ce**
**que** l'élément de pression (9) est agencé dans un flux de force entre le corps de base (16) du plancher pendulaire (3) et le segment de plancher avant (7) et/ou dans lequel l'élément de pression (9) est conçu comme un ressort pneumatique.

8. Module d'accouplement (1) selon l'une des revendications précédentes,
**caractérisé en ce**
**qu**'un moyen de traction (10) est agencé sur le plancher pendulaire (3), au moyen duquel moyen de traction le segment de plancher avant (7) peut être soumis à une force et/ou dans lequel le moyen de traction (10) est conçu comme une courroie plate, une corde et/ou une courroie dentée.

9. Module d'accouplement (1) selon la revendication 8,
**caractérisé en ce**
**que** le moyen de traction (10) soumet le segment de plancher avant (7) à une force à l'encontre de la force de l'élément de pression (9) dans une direction de rétraction (Re).

10. Module d'accouplement (1) selon la revendication 8 ou 9, **caractérisé en ce**
**qu**'une unité d'entraînement (11) est prévue, avec laquelle le moyen de traction (10) est en liaison active.

11. Module d'accouplement (1) selon l'une des revendications précédentes,
**caractérisé en ce**
**que** le segment de plancher avant (7) est recouvert par l'auvent repliable (12) et/ou l'auvent repliable (12) présente des plis ou des ondulations plus longs dans la zone du segment de plancher avant (7) que dans la zone du plancher pendulaire (3).

12. Module d'accouplement (1) selon la revendication 11,
**caractérisé en ce**
**qu**'une zone d'extrémité inférieure de l'auvent repliable (12) est guidée jusqu'en dessous de la face supérieure accessible du plancher pendulaire (3) afin d'empêcher la formation d'un espace entre l'auvent repliable (12) et le plancher pendulaire (3) lors d'un pivotement du plancher pendulaire (3) autour de l'axe de pivotement (4).

13. Module d'accouplement (1) selon l'une des revendications précédentes,
**caractérisé en ce**
**que** le plancher pendulaire (3) forme, conjointement avec le segment de plancher avant (7), le pare-chocs (8), l'élément de pression (9), le moyen de traction (10), le moyen d'entraînement (11) et/ou l'auvent repliable (12), un ensemble pouvant être préfabriqué, lequel peut être disposé sur la cabine (2).

14. Module d'accouplement (1) selon l'une des revendications précédentes,
**caractérisé en ce**
**qu**'un bras porteur (13) est disposé sur la cabine (2), au moyen duquel le plancher pendulaire (3) et/ou l'ensemble pouvant être préfabriqué sont reçus sur la cabine (2) de manière à pouvoir pivoter dans l'axe de pivotement (4).

15. Passerelle d'embarquement (100) ou escalier d'embarquement comportant un module d'accouplement (1) selon l'une des revendications précédentes.
